# EUROPEAN PATENT SPECIFICATION

(11) **EP 1 931 898 B1**
(45) Date of publication and mention of the grant of the patent: **31.03.2010**
(21) Application number: 05813171.5
(22) Date of filing: 05.10.2005
(51) Int. Cl.: F16J 15/32, F16J 15/56, G01D 5/165

(54) **SENSOR**
SENSOR
CAPTEUR

(43) Date of publication of application: 18.06.2008
(73) Proprietor: Gefran S.p.A., 25050 Provaglio d'Iseo (Brescia) (IT)
(72) Inventor: PICERNO, Michele, I-24100 Bergamo (IT); CASATI, Marco, I-25063 Gardone Val Trompia, Bergamo (IT)
(74) Representative: Leihkauf, Steffen Falk
(86) International application number: PCT/IT2005/000574
(87) International publication number: WO 2007/039921

(56) References cited:
- EP-A- 1 264 991
- DE-A1- 2 321 343
- DE-A1- 10 314 962
- GB-A- 1 298 472
- GB-A- 2 219 050
- US-A- 3 549 154
- US-A- 4 709 932
- US-A1- 2004 206 590

## Description

The object of the present invention is a sensor of the type comprising a sensitive member being housed within a housing and a stem extending from outside the housing to the inside of the same where it interacts with the sensitive member for transmitting to the latter a value to' be measured,' such as the movement or the location of a stem outer portion protruding from the housing.

This type of sensor has a number of applications. A typical example is a linear transducer assembled to an excavator for monitoring the location of the excavator arm or a plastic injection press for monitoring the location of the half-moulds. In this cases, the housing and the outer portion of the stem are connected to two locations on the excavator or press, respectively, of which the (variation in the) distance or relative position is measured. The sensitive member is, for example, a potentiometer accommodated within the housing and functionally operating with a stem inner portion that transmits either the location or movement of its outer portion to the potentiometer.

According to the particular application, the' sensor is exposed to an external environment which is more or less aggressive and damaging for both the sensitive members and the electronic components provided for signal processing. In the case of applications on earth-moving machines, for example, the sensor is exposed to humidity and temperature changes, rain, as well as earth, dust and ice depositing on the stem. In industrial applications, the sensor is often installed in corrosive and dusty environments.

In order to ensure a suitable protection to the sensitive member and electric components provided for signal processing, the opening through which the stem is inserted in the housing requires to be sealed by suitable sealing means.

The sealing means of the prior art, though being satisfactory in terms of protection (for example, the standard IP67 which indicates a determined protection against humidity and dust penetration), have the drawback of being subject to high wear. While the sensitive member of a linear potentiometer transducer reaches for example a duration of more than 100 million maneuvers (corresponding to more than 25 thousand kilometer movement of the stem relative to the housing) without requiring any maintenance or replacement operation, the sealing means will be worn much before, such that the degree of protection required by the application cannot be guaranteed over time. GB 1298472 A1 discloses an example of a prior art sensor device.

Accordingly, the object of the present invention is to provide a sensor having such characteristics to overcome the drawbacks mentioned with reference to prior art.

This and other objects are achieved by means of a sensor comprising;

- a housing defining an inner space and a paas-through opening;

- a sensitive member accommodated within the inner space;

- a stem extending, through the pass-through opening, from outside the housing to the inner space where it interacts with the sensitive member for transmitting to the latter a value to be measured,

- means suitable to seal the gap between the pass-through opening and the stem, wherein said means comprise:

- a seal in pressing contact with a seat formed in the pass-through opening, and with the stem;

- lubricating material arranged such that it wets the seal when the sensor is operating, said sensor comprising the features of annexed claim 1.

Due to the provision of lubricating material, being arranged such that it wets the seal when the sensor is operating, a surprising wear reduction in the seal and a consequent increase in the sensor life are achieved when the same operates in a hard environment.

Referring particularly to those sensors being exposed to incrustations, such as dust, earth or ice, the object of the invention is further achieved by means of a sensor in which the means for sealing the gap between the pass-through opening and the stem comprise:

- a seal in pressing contact with a seat formed in the pass-through opening, and with the stem;

- a substantially rigid, outer scraper extending about the stem in a position between the seal and the stem outer portion protruding from the housing, the scraper being suitable to scrap deposits or incrustations from the outer portion before the same reaches the seal and has such a shape as to substantially prevent any pressing contact of the latter with the stem.

By means of the outer scraper, one obtains a considerable reduction in the deposits and incrustation to which the "pressing" seal is subjected, thereby the shelf life of the latter is increased, and further, due to the "non-pressing" interaction of the stem and the outer scraper, the wear of the outer scraper is reduced.

While said solutions fulfill the object of the invention in an independent and satisfactory manner, a versatile use of the -same sensor in hard environments being very different from each other, for example humidity or corrosive substances, incrustations, fine and coarse dusts, ice, etc., can be obtained by combining both solutions, whereby the same can be mass manufactured.

In order to better understand the invention and appreciate the advantages thereof, several embodiments of the same will be described herein below, with reference to the figures, in which:

Fig. 1 is a front view of a sensor according to an embodiment of the invention;

Fig. 2 is a sectional view according to line II-II in Fig. 1;

Fig. 3 is an enlarged view of the detail III from Fig. 2;

Fig. 4 is an exploded view of a sensor according to an embodiment of the invention;

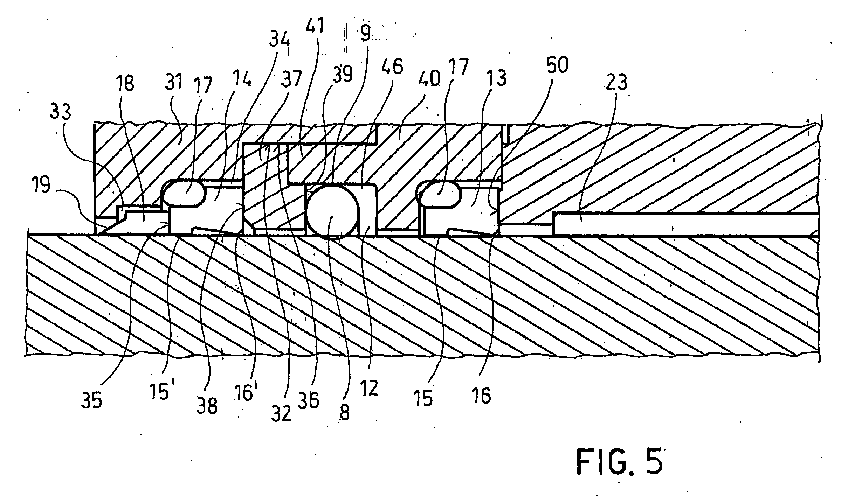

Fig. 5 is an enlarged sectional view of a detail of the sensor from Fig. 5;

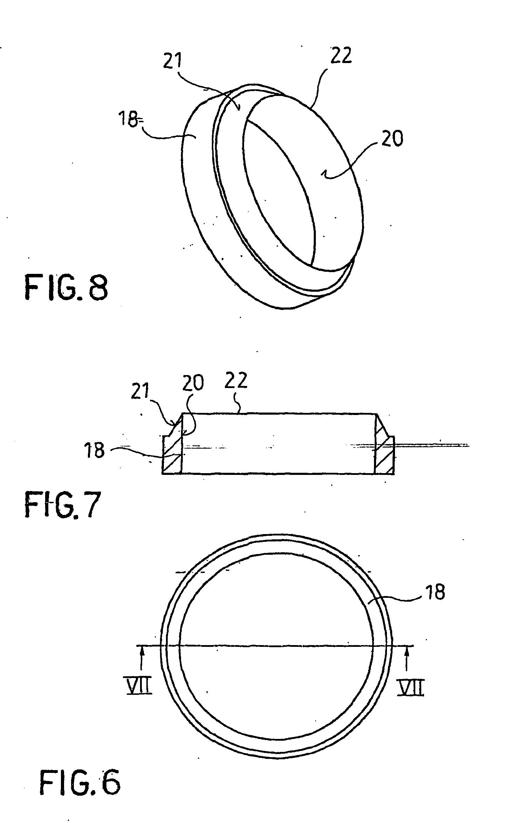

Fig. 6 is a front view of a further detail of the sensor from Fig. 5;

Fig. 7 is a sectional view according to line VII-VII of the detail from Fig. 6;

Fig. 8 is a perspective view of the detail from Fig. 6;

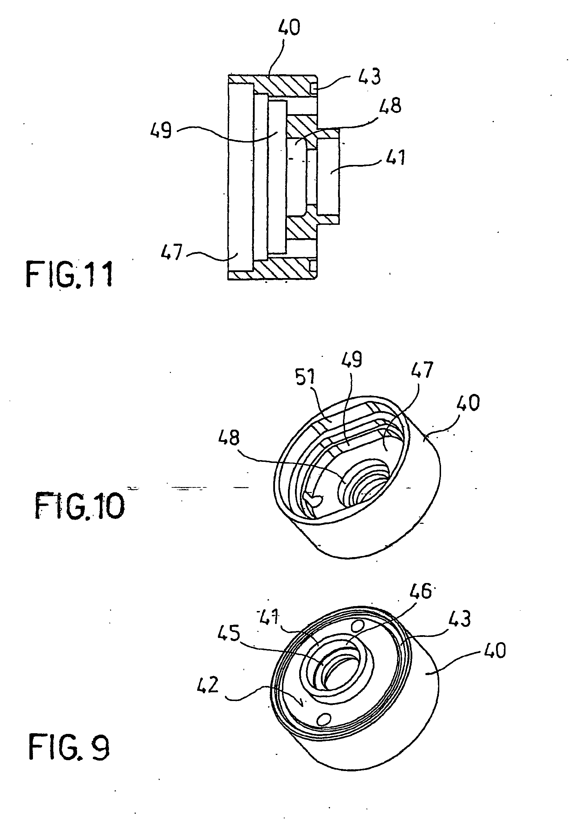

Fig. 9 is a front perspective view of a further detail of the sensor from Fig. 5;

Fig. 10 is a rear perspective view of the detail from Fig. 9;

Fig. 11 is a sectional view of the detail from Fig. 9.

The sensor according to the invention, for example a linear transducer, is overall designated with numeral 1 and comprises a housing 2 defining an inner space 3 and a pass-through opening 4. A sensitive member 5, for example a potentiometer, is accommodated within the inner space 3. A stem 10, preferably rigid, or alternatively flexible or articulated, extends through the pass-through opening 4, from outside the housing to the inner space 3 where it interacts with the sensitive member 5 to transmit to the latter a value to be measured, such as a location, movement, or speed value, either translational, or angular.

Means sealing the gap between the pass-through opening 4 and the stem 10 are further provided such that a high degree of protection is guaranteed for the inner space relative to the outside environment, referring particularly to penetration of dirt and humidity. Besides separating the inner space 3 from the external environment, these means divide the stem between an inner portion 6 arranged within the housing 2, and more precisely within the inner space 3, and an outer portion 7 erecting from the housing 2 and exposed to the external environment. Of course, the length of the inner 6. and outer 7 portions will change according to the position of the stem and the housing relative to each other.

The sealing means comprise a seal, preferably an on ring 8, which is abutted, in pressing contact, against a seal seat 9 in the pass-through opening 4 and against the stem 10 and lubricating material 11 arranged in a lubricant chamber 12 formed in the housing 2 in communication with the seal seat 9, such that the seal 8 is wetted when the sensor 1 is operating.

This implies an increase in the degree of protection from the penetration of humidity and dust while reducing the wear of the seal, thereby the sensor is highly protected over time.

In accordance with an embodiment, a first inner scraper 13 is arranged between the seal 8 and the sensitive member 5 and a second inner scraper 14 is arranged between the seal and the outer portion of the stem 10, both inner scrapers 13, 14 being in pressing contact with the stem 10 such that together with the latter they define the lubricant chamber 12. The pressing contact between the two inner scrapers and the stem can be obtained for example through an elastic preload biasing the scrapers towards the stem in the radial direction.

The first inner scraper 13 separates the lubricant chamber 12 from the sensitive member 5 such that any contact of the lubricating material contained in the lubricant chamber with the sensitive member is either hindered or prevented.

Besides protecting the sensitive member and any further data processing electronic device from (excessive) contact with the lubricating material, the two inner scrapers effectively avoid that the lubricating material is polluted by foreign substances, and that the lubricating material leaks out from the lubricant chamber and the seal seat.

In accordance with an embodiment, the inner scrapers 13, 14 form each a first contact area 15, 15' that provides a substantially cylindrical surface abutment against the stem and a second contact area 16, 16' that provides an abutment against the stem substantially following an annular line.

To prevent the sensitive member from being polluted by the lubricant and the lubricant from being polluted by the dirt from the external environment, it is particularly advantageous for the inner scrapers to be arranged such that the first (surface) contact area 15 of the first inner scraper 13 faces the lubricant chamber and the first (surface) contact area 15' of the second inner scraper 14 faces the outer portion of the stem.

Advantageously, the two inner scrapers are made of plastic material, preferably loaded with brass or graphite and preloaded through an elastic collar 17, such as an o-ring, preferably made of NBR material.

In accordance with a further embodiment, a rigid, outer scraper 18, preferably made of metal, extends around the stem 10 in a position between the seal 8 and the outer portion 7 of the stem. When moving the stem for insertion into the housing, the outer scraper 18 eliminates deposits or incrustations on the outer potion 7 before the latter reaches the seal 8. The outer scraper 18 is hold and shaped such that a pressing contact of the same with the stem 10 is substantially prevented.

Advantageously, the outer scraper 18 is held within the housing 2 in a floating manner, for example with such a clearance allowing the same to follow, to some extent, the transversal movements and inclinations of the stem.

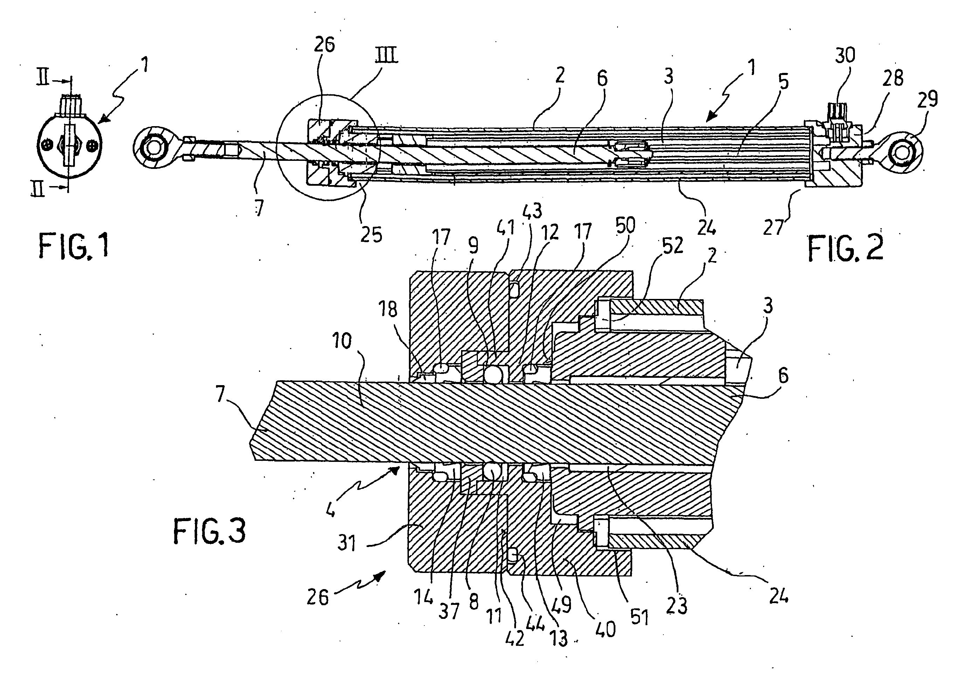

In accordance with the embodiment illustrated in Fig. 3, the outer scraper 18 is arranged between the second inner scraper 14 and the outer portion of the stem. Thereby, the second inner scraper 14 separates the lubricant chamber 12 from the outer scraper and either hinders or prevents that the lubricating material 11 may get in contact with the impurities from the external environment that are near the outer scraper.

According to an embodiment, the outer scraper 18 has an active portion 19 with an inner cylindrical surface 20 facing the stem and a conical outer surface 21 converging in a sharp edge 22 facing the outer portion 7 of the stem.

Since the outer scraper eliminates possible incrustations and impurity deposit on the stem, according to the particular embodiment, wear is reduced in the seal or second inner scraper, and their exposal to polluting substances is decreased.

To further avoid an undesired decrease in the degree of protection over time, the sensor is provided with guide means, preferably at least one plain bearing 23 holding the stem such as to prevent the stem from unevenly resting on the seal 8 and/or the inner scrapers 13, 14 and/or the outer scraper 18. Preferably, at least one bearing is arranged between the lubricant chamber 12 and the sensitive member 5.

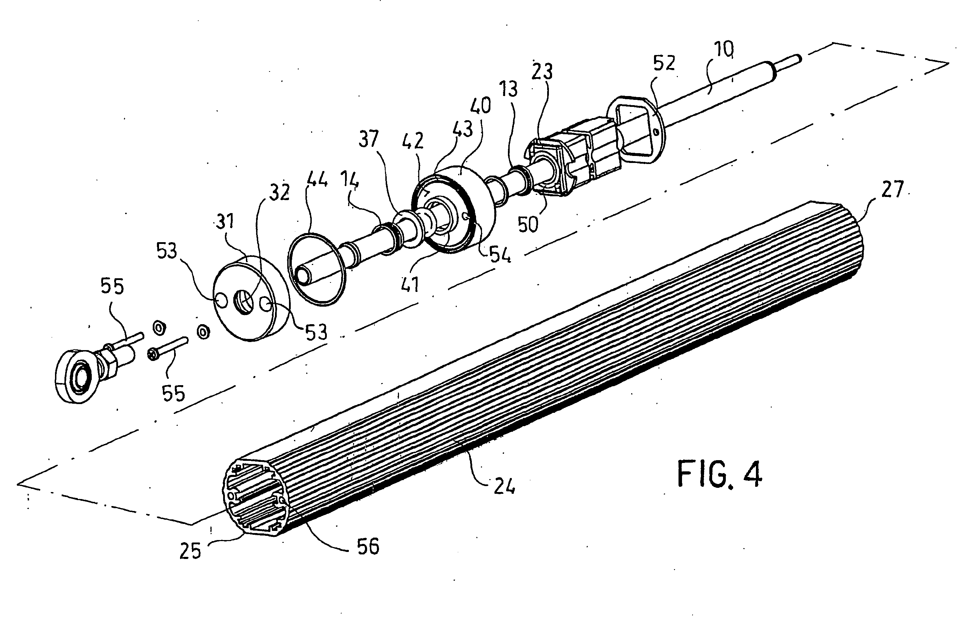

Fig. 1 to 4 illustrate a linear transducer according to a preferred embodiment, in which the housing 2 comprises a tubular middle portion 24, preferably an aluminum extruded section with a front end 25 to be coupled with a first cover 26 defining the pass-through opening 4 and a rear end 27 opposite the front end 25 to which there may be connected a second cover 28 provided with an element 29 for securing the housing to an application first part, and preferably, with an electric connector 30 for connecting the sensor electronic board to an external data processing system (not illustrated in the figures).

The first cover 26 comprises a front portion 31 and a rear portion 40.

The front portion 31 is substantially cylindrical with an inner surface 32 defining a middle opening with three shoulders, or more precisely, with three co-axial seats facing the rear end 27 of the sensor.

A first seat 33, preferably cylindrical, is suitable to accommodate the outer scraper 18 with clearance, i.e. in a floating manner.

A second seat 34 being formed adjacent to the seat 33 for the outer scraper 18 is suitable to accommodates the second inner scraper 14, which forms preferably an abutment surface 35 for the outer scraper 18, thereby preventing the same from being displaced in the longitudinal direction towards the seal 8 and the inner space 3.

A third seat 36 formed adjacent, to the seat 34 for the second inner scraper accommodates a separation ring 37 having a front surface 38 facing the outer portion of the stem and being an abutment for the second inner scraper 14, thereby preventing the same from being displaced in the longitudinal direction towards the seal and the inner space, as well as a rear surface 39 facing the inner space.

The seat 36 for the separation ring 37 preferably further accommodates a coupling portion 41, preferably tubular and cylindrical, of the rear portion 40.

The rear portion 40 of the first cover 26 defines a middle opening and comprises a front surface 42, said coupling portion 41 protruding therefrom. Radially outside and preferably co-axial with the coupling portion 41 there is formed an annular seat 43 for a seal, such as an o-ring 44, that allows sealing coupling of the front portion 31 with the rear portion 40 of the first cover 26.

Within the coupling portion 41 there is formed an annular shoulder 45 such as to define a cup-shaped seat 46 facing the separation ring 37.

The cup-shaped seat 46 defines the seal seat 9, together with the rear surface 39 of the separation ring 37 and the stem 10.

Advantageously, the coupling portion 41, or more generally the seal seat 9, has an inner diameter such as to cause a radial compression by the seal 8 against the stem 10 and a length greater than the longitudinal extension of the seal 8, such that a space is defined adjacent to the seal 8 which acts as the lubricant chamber 12. This lubricant chamber 12 is filled with the lubricating material 11, such as a lubricating grease, when assembling the first cover 26. The separation ring 37 and the annular shoulder 45 within the coupling portion have an inner diameter greater than the section diameter of the stem 10, such as to define, together with the latter, a passageway for the lubricating material, i.e. an extension of the lubricant chamber 12 to the two inner scrapers 13, 14.

A rear surface 47 of the rear portion 40 forms at least three shoulders or, more precisely, at least three co-axial seats facing the rear end of the sensor.

A first seat 48 accommodates the first inner scraper 13.

A second seat 49 formed adjacent to the seat 48 for the first inner scraper accommodates the bearing 23, which is preferably provided with a front surface 50 facing the outer portion 7 of the stem being an abutment for the first inner scraper 13, thereby preventing the same from being displaced in the longitudinal direction towards the inner space 3.

A third seat 51 formed adjacent to the seat 49 for the bearing accommodates the front end 25 of the tubular middle portion 24, preferably by interposing a flat seal 52 the shape of which depends on the shape of the extruded section of the middle portion 24.

The front portion 31 and rear portion 40 of the first cover comprise at least one, preferably two aligned through holes 53, 54 that house respective clamping screws 55 that can be screwed in threaded holes 56 being formed in the front end 25 of the housing middle portion. Thereby, the two portions of the first cover can be tightened both to each other and the tubular middle portion such as to obtain a reliable and durable sealing of the sensor.

Different materials for the lubricating material, seal and inner scrapers have been tested within the scope of the present invention, and deemed satisfactory.

By way of example, LGMT2, LGEP2, LGHP2, LGET2 lubricating greases-, sold by SKF, for use as the lubricating material, Turcon^{®} Excluder^{®} 2 code T46 scrapers for use as the inner scrapers and NBR o-ring for use as the seal are mentioned as being particularly advantageous.

To overcome wear problems in the seal-stem system, which may occur due to the continuous pressure of the seal and inner scrapers against the stem, it is further advantageous that the stem is formed of steel, at least surface-hardened, or plated by, for example, a layer of chrome.

## Claims

1. A sensor (1) comprising:
- a housing (2) defining an inner space (3) and a pass-through opening (4);
- a sensitive member (5) accommodated within the inner space (3);
- a stem (10) extending through the pass-through opening (4), from outside the housing to the inner space (3) where it interacts with the sensitive member (5) for transmitting to the latter a value to be measured,
- means (8, 11) suitable to seal the gap between the pass-through opening (4) and the stem, said means comprising a seal (8) being in pressing contact with a seal seat (9) formed in the pass-through opening (4), and with the stem (10) and lubricating material (11) being arranged such as to wet the seal (8) when the sensor (1) is operating, ***c*haracterized by** comprising:
- a lubricant chamber (12) communicating with the seal seat (9) and
- first and second inner scrapers (13, 14) at least partially defining said lubricant chamber (12) together with the stem (10) and the first inner scraper (13) separating the lubricant chamber (12) from the sensitive member (5) such that any contact by the lubricating material (11) contained in the lubricant chamber with the sensitive member is either hindered or prevented.

2. The sensor according to claim 1, wherein the seal (8) comprises an O-ring.

3. The sensor according to claim 1 or 2, *wherein said* first inner scraper (13) being arranged between the seal (8) and the sensitive member (5), and a *said* second inner scraper (14) being arranged between the seal (8) and an outer portion (7) of the stem (10) protruding from the housing (2), wherein the first and second inner scrapers are in pressing contact with the stem.

4. The sensor according to claim 3, wherein the first and second inner scraper (13, 14) are elastically preloaded against the stem (10).

5. The sensor according to claim 4, wherein the first and second inner scrapers (13, 14) each comprise a first contact area (15, 15') and a second contact area (16, 16'), wherein the first contact area provides a substantially cylindrical surface abutment on the stem and the second contact area provides an abutment on the stem substantially following an annular line.

6. The sensor according to any claim 3 to 5, wherein;the first and second scrapers (13, 14) are made of plastic material.

7. The sensor according to any preceding claim, comprising an outer, substantially rigid scraper (18) extending about the stem (10) in a position between the seal (8) and the outer portion (7) of the stem, wherein the outer scraper is suitable to scrap deposits or incrustations from the outer portion before the latter reaches the seal (8) and wherein the outer scraper (18) has such a shape as to substantially prevent any pressing contact of the latter with the stem.

8. The sensor according to the preceding claim, wherein the outer scraper (18) is held within the housing in a floating manner such that it may follow, to some extent, the movements of the stem.

9. The sensor according to claim 7 or 8, comprising means (14) for separating the lubricant chamber (12) from the outer scraper (18) such that a contact of the lubricating material contained in the lubricant chamber with impurities from the external environment that are arranged near the outer scraper is either hindered or prevented.

10. The sensor according to claim 9, wherein the outer scraper (18) is arranged between the second inner scraper (14) and the outer portion (7) of the stem, such that the second inner scraper (14) separates the lubricant chamber (12) from the outer scraper (18).

11. The sensor according to one of the claims 7 to 10, wherein the outer scraper (18) is made of a metal material.

12. The sensor according to one of the claims 7 to 11,
wherein the outer scraper (18) has an active portion (19) having a substantially cylindrical inner portion (20) and a substantially conical outer portion (21) converging in a sharp edge (22) facing the outer portion (7) of the stem.

13. The sensor according to any preceding claim, comprising guide means (23) supporting the stem (10) such that the stem (10) is caused to evenly abut against the seal (8) and/or inner scrapers (13, 14) and/or outer scraper (18).

14. The sensor according to claim 10, wherein the guide means (23) comprise a bearing.

15. The sensor according to claim 14, wherein the bearing is arranged between the lubricant chamber (12) and the sensitive member (5).

16. The sensor according to any preceding claim, wherein the stem is either made of hardened or surface-chrome plated steel.

17. The sensor according to any preceding claim, which is a linear transducer.

18. The sensor according to any preceding claim, wherein the sensitive member (5) is a potentiometer.

## Patentansprüche

1. Sensor (1), enthaltend:
- ein Gehäuse (2), das einen Innenraum (3) und eine Durchgangsöffnung (4) definiert;
- ein Fühlerelement (5), das in dem Innenraum (3) aufgenommen ist;
- einen Schaft (10), der sich durch die Durchgangsöffnung (4) von der Außenseite des Gehäuses in den Innenraum (3) erstreckt, wo er mit dem Fühlerelement (5) zusammenwirkt, um auf das letztgenannte einen zu messenden Wert zu übertragen;
- eine Einrichtung (8, 11) die dazu eingerichtet ist, den Spalt zwischen der Durchgangsöffnung (4) und dem Schaft abzudichten, wobei die Einrichtung eine Dichtung (8), die in einem Druckkontakt mit einem Dichtungssitz (9), der in der Durchgangsöffnung (4) ausgebildet ist, und dem Schaft (10) ist, und ein Schmiermittel (11) enthält, das derart beschaffen ist, dass die Dichtung (8) benetzt wird, wenn der Sensor (1) arbeitet, **dadurch gekennzeichnet, dass** er enthält:
- eine Schmiermittelkammer (12), die mit dem Dichtungssitz (9) in Verbindung steht, und
- einen ersten sowie einen zweiten inneren Abstreifer (13, 14), die wenigstens teilweise die Schmiermittelkammer (12) zusammen mit dem Schaft (10) definieren, wobei der erste innere Abstreifer (13) die Schmiermittelkammer (12) von dem Fühlerelement (5) derart trennt, dass ein Kontakt durch das Schmiermittel (11), das in der Schmiermittelkammer enthalten ist, mit dem Fühlerelement entweder behindert oder vermieden wird.

2. Sensor nach Anspruch 1, bei dem die Dichtung (8) einen O-Ring enthält.

3. Sensor nach Anspruch 1 oder 2, bei dem der erste innere Abstreifer (13) zwischen der Dichtung (8) und dem Fühlerelement (5) angeordnet ist und der zweite innere Abstreifer (14) zwischen der Dichtung (8) und einem äußeren Abschnitt (7) des Schaftes (10) angeordnet ist, der von dem Gehäuse (2) hervorragt, wobei der erste und der zweite innere Abstreifer in Druckkontakt mit dem Schaft stehen.

4. Sensor nach Anspruch 3, bei dem der erste und der zweite innere Abstreifer (13, 14) gegen den Schaft (10) elastisch vorgespannt sind.

5. Sensor nach Anspruch 4, bei dem der erste und der zweite innere Abstreifer (13, 14) jeweils einen ersten Kontaktbereich (15, 15') und einen zweiten Kontaktbereich (16, 16') enthalten, wobei der erste Kontaktbereich eine im wesentlichen zylindrische Oberflächenangrenzung auf dem Schaft erzeugt und der zweite Kontaktbereich eine Angrenzung auf dem Schaft erzeugt, die im wesentlichen einer ringförmigen Linie folgt.

6. Sensor nach einem der Ansprüche 3 bis 5, bei dem der erste und der zweite Abstreifer (13, 14) aus einem Kunststoffmaterial bestehen.

7. Sensor nach einem der vorhergehenden Ansprüche, enthaltend einen äußeren, im wesentlichen starren Abstreifer (18), der sich um den Schaft (10) an einer Stelle zwischen der Dichtung (8) und dem äußeren Abschnitt (7) des Schaftes erstreckt, wobei der äußere Abstreifer dazu eingerichtet ist, Ablagerungen oder Verkrustungen von dem äußeren Abschnitt abzustreifen, bevor letztgenannter die Dichtung (8) erreicht, und der äußere Abstreifer (18) eine derartige Form hat, dass im wesentlichen ein Druckkontakt der letztgenannten mit dem Schaft verhindert ist.

8. Sensor gemäß dem vorhergehenden Anspruch, bei dem der äußere Abstreifer (18) in dem Gehäuse derart frei gehalten ist, dass er bis zu einem gewissen Grad den Bewegungen des Schaftes folgen kann.

9. Sensor nach Anspruch 7 oder 8, enthaltend eine Einrichtung (14), die die Schmiermittelkammer (12) von dem äußeren Abstreifer (18) derart trennt, dass ein Kontakt des Schmiermittels, das in der Schmiermittelkammer enthalten ist, mit Verunreinigungen von außen, die sich in der Nähe des äußeren Abstreifers befinden, entweder behindert oder vermieden wird.

10. Sensor nach Anspruch 9, bei dem der äußere Abstreifer (18) zwischen dem zweiten inneren Abstreifer (14) und dem äußeren Abschnitt (7) des Schaftes derart angeordnet ist, dass der zweite innere Abstreifer (14) die Schmiermittel kammer (12) von dem äußeren Abstreifer (18) trennt.

11. Sensor nach einem der Ansprüche 7 bis 10, bei dem der äußere Abstreifer (18) aus einem Metallmaterial besteht.

12. Sensor nach einem der Ansprüche 7 bis 11, bei dem der äußere Abstreifer (18) einen aktiven Abschnitt (19) aufweist, der einen im wesentlichen zylindrischen inneren Abschnitt (20) und einen im wesentlichen konischen äußeren Abschnitt (21) hat, die in einer scharfen Kante (22) zusammenlaufen, die dem äußeren Abschnitt (7) des Schaftes zugewandt ist.

13. Sensor nach einem der vorhergehenden Ansprüche, enthaltend eine Führungseinrichtung (23), die den Schaft (10) derart hält, dass der Schaft (10) gleichmäßig an der Dichtung (8) und/oder den inneren Abstreifern (13, 14) und/oder dem äußeren Abstreifer anliegt.

14. Sensor nach Anspruch 10, bei dem die Führungseinrichtung (23) ein Lager enthält.

15. Sensor nach Anspruch 14, bei dem das Lager zwischen der Schmiermittelkammer (12) und dem Fühlerelement (5) angeordnet ist.

16. Sensor nach einem der vorhergehenden Ansprüche, bei dem der Schaft entweder aus einem gehärteten oder oberflächenverchromten Stahl besteht.

17. Sensor nach einem der vorhergehenden Ansprüche, der ein linearer Wandler ist.

18. Sensor nach einem der vorhergehenden Ansprüche, bei dem das Fühlerelement (5) ein Potentiometer ist.

## Revendications

1. Capteur (1) comprenant :
- un logement (2) définissant un espace intérieur (3) et une ouverture traversante (4) ;
- un organe sensible (5) reçu dans l'espace intérieur (3) ;
- une tige (10) s'étendant à travers l'ouverture traversante (4), de l'extérieur du logement jusqu'à l'espace intérieur (3) où elle interagit avec l'organe sensible (5) pour lui transmettre une valeur à mesurer,
- un moyen (8, 11) approprié pour sceller le jeu entre l'ouverture traversante (4) et la tige, ledit moyen comprenant un joint (8) qui se trouve en contact à pression avec un siège (9) du joint formé dans l'ouverture traversante (4), et avec la tige (10) et une matière lubrifiante (11) qui est agencée de manière à humidifier le joint (8) lorsque le capteur (1) est opérationnel, **caractérisé en ce qu'**il comprend :
- une chambre (12) à lubrifiant communiquant avec le siège (9) du joint et
- des premier et second grattoirs intérieurs (13, 14) définissant au moins en partie ladite chambre (12) à lubrifiant avec la tige (10) et le premier grattoir intérieur (13) séparant la chambre (12) à lubrifiant de l'organe sensible (5) de manière à entraver ou empêcher tout contact entre la matière lubrifiante (11) contenue dans la chambre à lubrifiant et l'organe sensible.

2. Capteur selon la revendication 1, dans lequel le joint (8) comprend un joint torique.

3. Capteur selon la revendication 1 ou 2, dans lequel ledit premier grattoir intérieur (13) est agencé entre le joint (8) et l'organe sensible (5), et undit second grattoir intérieur (14) est agencé entre le joint (8) et une partie extérieure (7) de la tige (10) faisant saillie du logement (2), dans lequel les premier et second grattoirs intérieurs sont en contact à pression avec la tige.

4. Capteur selon la revendication 3, dans lequel les premier et second grattoirs intérieurs (13, 14) sont pré-sollicités de manière élastique contre la tige (10).

5. Capteur selon la revendication 4, dans lequel chacun des premier et second grattoirs intérieurs (13, 14) comprend une première zone de contact (15, 15') et une seconde zone de contact (16, 16'), dans lequel la première zone de contact procure une butée à surface essentiellement cylindrique sur la tige et la seconde zone de contact procure une butée sur la tige suivant sensiblement une ligne annulaire.

6. Capteur selon l'une quelconque des revendications 3 à 5, dans lequel les premier et second grattoirs (13, 14) sont réalisés en matériau plastique.

7. Capteur selon l'une quelconque des revendications précédentes, comprenant un grattoir extérieur (18) essentiellement rigide s'étendant autour de la tige (10) à une position entre le joint (8) et la partie extérieure (7) de la tige, dans lequel le grattoir extérieur est approprié pour gratter des dépôts ou des incrustations depuis la partie extérieure avant que ce dernier n'atteigne le joint (8) et dans lequel le grattoir extérieur (18) a une forme telle qu'elle empêche sensiblement tout contact à pression de ce dernier avec la tige.

8. Capteur selon la revendication précédente, dans lequel le grattoir extérieur (18) est maintenu dans le logement de manière flottante de sorte qu'il puisse suivre, dans une certaine mesure, les mouvements de la tige.

9. Capteur selon la revendication 7 ou 8, comprenant un moyen (14) destiné à séparer la chambre (12) à lubrifiant du grattoir extérieur (18) de manière à entraver ou empêcher un contact de la matière lubrifiante contenue dans la chambre à lubrifiant avec des impuretés provenant de l'environnement extérieur qui se trouvent à proximité du grattoir extérieur.

10. Capteur selon la revendication 9, dans lequel le grattoir extérieur (18) est agencé entre le second grattoir intérieur (14) et la partie extérieure (7) de la tige, de sorte que le second grattoir intérieur (14) sépare la chambre (12) à lubrifiant du grattoir extérieur (18).

11. Capteur selon l'une des revendications 7 à 10, dans lequel le grattoir extérieur (18) est réalisé en un matériau métallique.

12. Capteur selon l'une des revendications 7 à 11, dans lequel le grattoir extérieur (18) possède une partie active (19) ayant une partie intérieure (20) essentiellement cylindrique et une partie extérieure (21) essentiellement conique convergeant en une arête vive (22) en vis-à-vis de la partie extérieure (7) de la tige.

13. Capteur selon l'une quelconque des revendications précédentes, comprenant un moyen de guidage (23) soutenant la tige (10) de manière à amener la tige (10) à buter uniformément contre le joint (8) et/ou contre les grattoirs intérieurs (13, 14) et/ou contre le grattoir extérieur (18) .

14. Capteur selon la revendication 10, dans lequel le moyen de guidage (23) comprend un palier.

15. Capteur selon la revendication 14, dans lequel le palier est agencé entre la chambre (12) à lubrifiant et l'organe sensible (5).

16. Capteur selon l'une quelconque des revendications précédentes, dans lequel la tige est réalisée soit en acier plaqué chromé en surface, soit en acier trempé.

17. Capteur selon l'une quelconque des revendications précédentes, qui est un transducteur linéaire.

18. Capteur selon l'une quelconque des revendications précédentes, dans lequel l'organe sensible (5) est un potentiomètre.
